# EUROPEAN PATENT SPECIFICATION

(11) **EP 4 595 789 B1**
(45) Date of publication and mention of the grant of the patent: **01.07.2026**
(21) Application number: 25153754.4
(22) Date of filing: 24.01.2025
(51) Int. Cl.: A24F 40/46, A24F 40/50, H02J 7/00, H02J 1/14

(54) **ATOMIZATION DEVICE CONTROL METHOD AND ATOMIZATION DEVICE**
ZERSTÄUBUNGSVORRICHTUNGSTEUERUNGSVERFAHREN UND ZERSTÄUBUNGSVORRICHTUNG
PROCÉDÉ DE COMMANDE DE DISPOSITIF D'ATOMISATION ET DISPOSITIF D'ATOMISATION

(30) Priority: 30.01.2024 CN 202410131603
(43) Date of publication of application: 06.08.2025
(73) Proprietor: Shenzhen Smoore Technology Limited, Shenzhen, Guangdong 518102 (CN)
(72) Inventor: ZHOU, Chengyong, Shenzhen, 518102 (CN); ZHANG, Chaozheng, Shenzhen, 518102 (CN); YU, Sanying, Shenzhen, 518102 (CN)
(74) Representative: Michalski Hüttermann & Partner mbB

(56) References cited:
- EP-A1- 3 818 870
- WO-A2-2018/020444
- CN-A- 108 720 084
- US-A1- 2023 210 190

## Description

### TECHNICAL FIELD

This application relates to the technical field of atomization devices, and in particular, to an atomization device control method and an atomization device.

### BACKGROUND

An atomization manner of an atomization device is as follows: a heating wire in an atomizer is heated to an atomization temperature of an aerosol-forming substrate, so that the aerosol-forming substrate is atomized to generate aerosol for a user to use.

With continuous changes of user's needs, when an existing atomization device with a single-heating wire device works for a long time, a substance generated by the atomization substrate is deposited on the heating wire, which affects normal working of the heating wire.

In this background, an atomization device including double heating wires is designed and put into use. When a conventional atomization device with double heating wires switches a working mode, a working heating wire is switched based on a fixed number of inhalations, or a working heating wire is switched based on accumulated heating amount of the heating wire. However, these switching methods may easily cause mismatches between the e-liquid and battery level, thus causing a waste of electric power, or causing a waste of aerosol-forming substrate due to an uncomplete atomization thereof, and reducing working performance of the atomization device.

Aerosol generating devices with two or more heating elements are described in patent documents EP 3 818 870 A1, CN 108 720 084 A, US 2023/210190 A1 and WO 2018/020444 A2.

### SUMMARY

Based on this, it is necessary to provide an atomization device control method and an atomization device that can improve working performance of the atomization device for the foregoing technical problem.

An atomization device control method, where the atomization device includes multiple heating elements, and the method includes:
obtaining a battery level parameter of the atomization device;
if the battery level parameter is less than a preset threshold, controlling the atomization device to work in a single-heating element mode; where in the single-heating element mode, one heating element in the atomization device works; or
if the battery level parameter is greater than or equal to the preset threshold, controlling the atomization device to work in a multi-heating element mode; where in the multi-heating element mode, at least two heating elements among the multiple heating elements in the atomization device work simultaneously.

In an embodiment, controlling the atomization device to work in a single-heating element mode includes:
controlling the heating elements to work successively, where only one heating element works within each different time period, and different heating elements work in different time periods; and
if a total working duration of the heating elements is greater than a preset total duration threshold, controlling the heating elements to stop working.

In an embodiment, controlling the atomization device to work in the single-heating element mode includes:
controlling the heating elements to work alternately; and
if a sum of cumulative working durations of the heating elements is greater than a preset total duration threshold, controlling the heating elements to stop working.

In an embodiment, after obtaining the battery level parameter of the atomization device, the method further includes:
if the battery level parameter is less than a preset battery level threshold, controlling the atomization device to work in a boost mode; or
if the battery level parameter is greater than or equal to the preset battery level threshold, controlling the atomization device to work in a Direct Current (DC) chopping mode; where a voltage provided for each heating element in the boost mode is greater than a voltage provided for each heating element in the DC chopping mode.

In an embodiment, controlling the atomization device to work in the multi-heating element mode includes:
controlling at least two heating elements in the multiple heating elements to work simultaneously; and
if heating duration is greater than a preset total duration threshold, controlling the multiple heating elements to stop working.

In an embodiment, before obtaining the battery level parameter of the atomization device, the method further includes:
determining whether a heating start signal is received or not; and
if yes, executing step of obtaining the battery level parameter of the atomization device.

In an embodiment, the method further includes:
in a working process of the multiple heating elements, if a heating stop signal is received, controlling the multiple heating elements to stop working.

In an embodiment, the battery level parameter is a battery level value, or a percentage of a current remaining power to a rated power.

In an embodiment, the preset total duration threshold is 8s.

In an embodiment, durations of the different time periods are the same.

An atomization device includes a power supply module, a control module, multiple output control modules, and multiple heating elements, where different heating elements are connected to different output control modules, respectively, and the power supply module and each output control module are both connected to the control module, and the control module is configured to implement any one of the foregoing methods.

In an embodiment, each output control module includes a Direct Current (DC) chopper and a boost circuit that are connected to the control module, and both the DC chopper and the boost circuit are connected to a corresponding heating element.

The control module is configured to, when the battery level parameter of the atomization device is less than the preset battery level threshold, control both the DC chopper and the boost circuit to work.

The control module is further configured to: when the battery level parameter of the atomization device is greater than or equal to the preset battery level threshold, control the DC chopper to work, and control the boost circuit to stop working.

In an embodiment, the DC chopper includes an output switching transistor and an output circuit.

A control terminal of the output switching transistor is connected to the control module, a first terminal of the output switching transistor is connected to the power supply module, and a second terminal of the output switching transistor is connected to a corresponding heating element through the output circuit.

In an embodiment, the output circuit includes an output inductor and an output diode. One terminal of the output inductor is connected to the second terminal of the output switching transistor, another terminal of the output inductor is connected to an anode of the output diode, and a cathode of the output diode is connected to the corresponding heating element.

In an embodiment, the boost circuit includes a boost control switching transistor, a boost capacitor, and a boost diode.

A cathode of the boost diode is connected to a first terminal of the output circuit, an anode of the boost diode is connected to a first terminal of the boost capacitor, and a second terminal of the boost capacitor is connected to a second terminal of the output circuit. A control terminal of the boost control switching transistor is connected to the control module, a first terminal of the boost control switching transistor is connected to the output circuit, and a second terminal of the boost control switching transistor is grounded.

In the foregoing atomization device control method and the atomization device, the atomization device includes multiple heating elements, and the method includes: obtaining a battery level parameter of the atomization device; if the battery level parameter is less than a preset threshold, controlling the atomization device to work in a single-heating element mode, where in the single-heating element mode, one heating element in the atomization device works; and if the battery level parameter is greater than or equal to the preset threshold, controlling the atomization device to work in a multi-heating element mode, where in the multi-heating element mode, at least two heating elements among the multiple heating elements in the atomization device work simultaneously. The atomization device is controlled to work in different modes according to the value of the battery level parameter of the atomization device, so that different numbers of heating elements can work. The heating degree is matched according to the battery level parameter and thus the atomization amount is matched, which can effectively solve the problem of mismatch between the e-liquid and battery level in a conventional dual-heating wire atomization device, and the working performance of the atomization device is improved.

### BRIEF DESCRIPTION OF THE DRAWINGS

FIG. 1 is a schematic flowchart of an atomization device control method according to an embodiment;
FIG. 2 is a schematic flowchart of steps of controlling an atomization device to work in a single-heating element mode according to an embodiment;
FIG. 3 is a schematic flowchart of steps of controlling an atomization device to work in a single-heating element mode according to another embodiment;
FIG. 4 is a schematic diagram of a time sequence for controlling heating elements to alternately work according to another embodiment;
FIG. 5 is a schematic flowchart of an atomization device control method according to another embodiment;
FIG. 6 is a schematic flowchart of steps of controlling an atomization device to work in a multi-heating element mode according to an embodiment;
FIG. 7 is a schematic flowchart of an atomization device control method according to still another embodiment;
FIG. 8 is a schematic structural block diagram of an atomization device according to an embodiment;
FIG. 9 is a schematic structural block diagram of an output control module according to an embodiment;
FIG. 10 is a schematic diagram of a circuit structure of an output control module according to an embodiment;
FIG. 11 is a schematic structural block diagram of an atomization device according to another embodiment;
FIG. 12 is a detailed schematic flowchart of an atomization device control method according to an embodiment; and
FIG. 13 is a detailed schematic flowchart of an atomization device control method according to another embodiment.

### DETAILED DESCRIPTION

To make the objectives, technical solutions, and advantages of this application clearer and better understood, this application is further described in detail with reference to the accompanying drawings and the embodiments hereinafter. It should be understood that the specific embodiments described herein are only used for explaining this application but not used for limiting this application.

An atomization device control method provided in an embodiment of this application is used to control an atomization device and may be specifically used to control a working state and a working mode of the atomization device. Generally, the atomization device includes a power supply module, a control module, an output control module, and a heating element. The power supply module is connected to the control module and the output control module and configured to supply power to the control module and the output control module. The heating element may be, for example, a heating wire, a heating coil, or a heating plate, but is not limited thereto. Exemplarily, the heating element in this embodiment may be a grid heating wire, and the grid heating wire is obtained by processing a stainless steel sheet into a grid shape through an etching process. There are at least two heating elements. Different heating elements are correspondingly connected to different output control modules, and one output control module is correspondingly connected to one heating element. The heating elements may be separately controlled, so that working states of the heating elements do not interfere with each other. Each output control module is connected to the control module, and the control module may control a working state of each output control module, so as to control a working state of a heating element connected to the output control module. Exemplarily, when the control module controls the output control module to be turned on, the heating element may work after being powered on by the output control module, and start to heat up. When the control module controls the output control module to be turned off, the heating element is powered off and stops heating up.

The atomization device control method may be performed by the control module of the atomization device. The control module may control the working state of the heating element by controlling the working state of the output control module and may further control a working state of another structure, which is not described herein. It may be understood that, in some other embodiments, the atomization device control method may be performed by a terminal or a server, which is communicatively connected to the atomization device and may exchange data with the atomization device. The terminal may be but is not limited to various personal computers, laptop computers, smartphones, tablet computers, Internet of Things devices, and portable wearable devices, and the server may be implemented by using an independent server or a server cluster including multiple servers.

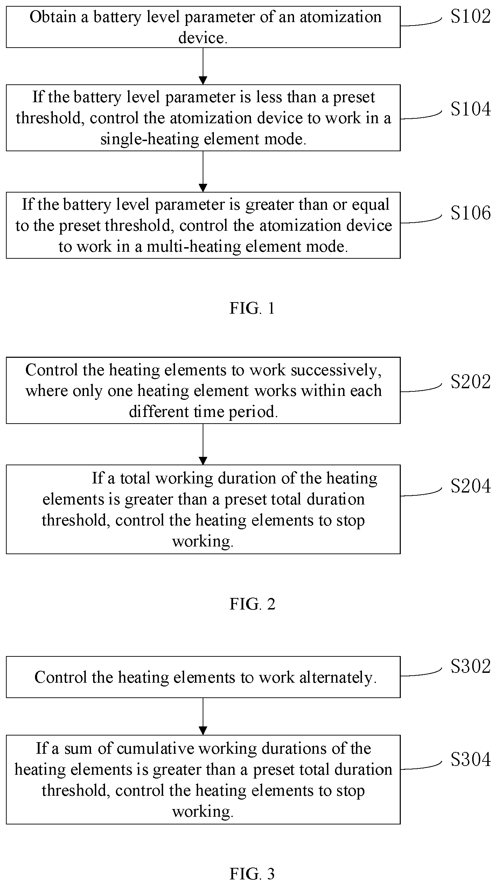

In an embodiment, as shown in FIG. 1, an atomization device control method is provided. The method is described by taking the method performed by a control module as an example and the method includes the following steps.

Step 102: Obtain a battery level parameter of an atomization device.

The battery level parameter is generally a battery level parameter of a power supply module of the atomization device and used to represent a current battery level of the atomization device. The battery level parameter may be a specific battery level value, or may be a percentage of a current remaining power to a rated power, which is not limited herein. Exemplarily, in this embodiment, the power supply module includes a battery, and the battery level parameter may be the percentage of the remaining power of the battery in the rated power.

Step 104: If the battery level parameter is less than a preset threshold, control the atomization device to work in a single-heating element mode.

The preset threshold is used as a comparison object for the battery level parameter, and has the same type as the battery level parameter. For example, if the battery level parameter is a percentage, the preset threshold is also a percentage. The power state of the atomization device may be determined according to a relationship between the battery level parameter and the preset threshold, and the atomization device is controlled to be in different working modes based on the power state. The value of the preset threshold may be determined according to the type of the power supply module, and may be, for example, 60% or 70%, but is not limited thereto.

If the battery level parameter is less than the preset threshold, it is determined that the current power of the atomization device is insufficient. In this case, the atomization device is controlled to work in the single-heating element mode, and in the single-heating element mode, one heating element in the atomization device works. In the single-heating element mode, only one heating element works at the same moment, and the heating intensity is relatively low, so that a match between e-liquid and battery level can be better implemented, thereby avoiding the following situation in a case of insufficient power: excessively high heating intensity causes excessively fast power consumption, resulting in that the aerosol-forming substrate still cannot be completely atomized after the power is used up, and resulting in a waste of resources.

The match between e-liquid and battery level is a desired state, which means that, according to user's needs, it is expected that the battery power matches with the quantity of the aerosol-forming substrate, that is, when the battery power is used up, the aerosol-forming substrate is also used up.

Step 106: If the battery level parameter is greater than or equal to the preset threshold, control the atomization device to work in a multi-heating element mode.

If the battery level parameter is greater than or equal to the preset threshold, it is determined that the current power of the atomization device is sufficient. In this case, the atomization device is controlled to work in the multi-heating element mode, and in the multi-heating element mode, at least two heating elements in the atomization device work simultaneously. In the multi-heating element mode, at least two heating elements work simultaneously. Further, working heating elements are heating elements connected to different output control modules. The number of working heating elements may be determined according to actual needs. For example, if the atomization device includes two heating elements, the number of the heating elements working in the multi-heating element mode is two. If the atomization device includes three heating elements, the number of the heating elements working in the multi-heating element mode may be two or three. It may be understood that the number of the heating elements working in the multi-heating element mode is not limited and may be determined according to actual needs.

If the battery level parameter is greater than or equal to the preset threshold, the atomization device is controlled to work in the multi-heating element mode. In this case, the power is sufficient, and the heating intensity is relatively high, so that the match between e-liquid and battery level can be better implemented, thereby avoiding the following situation in a case of sufficient power: excessively low heating intensity causes excessively slow power consumption, resulting in that the aerosol-forming substrate has been completely atomized before the power is used up, and resulting in a waste of power.

In the foregoing atomization device control method, the atomization device includes at least two heating elements, and the method includes: obtaining the battery level parameter of the atomization device; and if the battery level parameter is less than the preset threshold, controlling the atomization device to work in the single-heating element mode, where in the single-heating element mode, one heating element in the atomization device works; or if the battery level parameter is greater than or equal to the preset threshold, controlling the atomization device to work in the multi-heating element mode, where in the multi-heating element mode, at least two heating elements in the atomization device work simultaneously. The atomization device is controlled to work in different modes according to the value of the battery level parameter of the atomization device, so that different numbers of heating elements can work. The heating degree is matched according to the battery level parameter and thus the atomization amount is matched, which can effectively solve the problem of mismatch between the e-liquid and battery level in a conventional dual-heating wire atomization device, and the working performance of the atomization device is improved.

In an embodiment, as shown in FIG. 2, in step 104, the step of controlling the atomization device to work in the single-heating element mode includes step 202 and step 204.

Step 202: Control the heating elements to work successively, where only one heating element works within each different time period.

Heating elements working in different time periods are different. Durations of different time periods may be the same or may be different, which may be determined according to an actual situation. The specific duration of the time period may be stored in the control module as a preset value after being determined according to experiments, or may be flexibly adjusted according to a received user instruction.

For example, the number of heating elements is two, and the heat elements include a heating element 1 and a heating element 2. The number of output control modules is two, and the output control modules include an output control module 1 and an output control module 2, where the output control module 1 is connected to the heating element 1, and the output control module 2 is connected to the heating element 2. If the battery level parameter is less than the preset threshold, the atomization device is controlled to work in the single-heating element mode. The heating elements are controlled to work successively, where only one heating element works within each different time period. Then, in the first time period (for example, 5 ms), the control module first controls the output control module 1 connected to the heating element 1 to output, so that the heating element 1 works, and obtains a working duration Ta of the heating element 1. After the working duration Ta of the heating element 1 reaches the duration of the first time period, within the second time period (for example, 5 ms), the control module further controls the output control module 2 connected to the heating element 2 to output, so that the heating element 2 works, and obtains a working duration Tb of the heating element 2, and the heating element 2 stops working after the working duration Tb of the heating element 2 reaches the duration of the second time period.

Step 204: If a total working duration of the heating elements is greater than a preset total duration threshold, control the heating elements to stop working.

The preset total duration threshold is used to represent a desired heating duration, and may be determined according to experiments or experience, or may be flexibly adjusted according to a received user instruction. Exemplarily, in an embodiment, the preset total duration threshold is 8s.

In the working process of each heating element, the control module records the working duration of each heating element and adds all working durations to obtain the total working duration of the heating elements. If the total working duration of the heating elements is greater than the preset total duration threshold, it is determined that needs of the total working duration are met, and the heating elements are controlled to stop working.

In this embodiment, the heating elements are controlled to work successively, where only one heating element works within each different time period, and different heating elements are controlled in turn to work in different time periods respectively, until the total working duration of the heating elements is greater than the preset total duration threshold and the heating elements are controlled to stop working. In each different time period, one heating element is controlled to work, thus heating intensity can be effectively limited. When the total working duration of the heating elements is greater than the preset total duration threshold, it is determined that the atomization device has completed a target work task, and the heating elements are controlled to stop working, thereby avoiding a waste of resources.

In an embodiment, as shown in FIG. 3, in step 104, the step of controlling the atomization device to work in the single-heating element mode includes step 302 and step 304.

Step 302: Control the heating elements to work alternately.

The heating elements working alternately means that the heating elements work in different time periods, respectively, and a working time period of one heating element includes time periods not adjacent to each other.

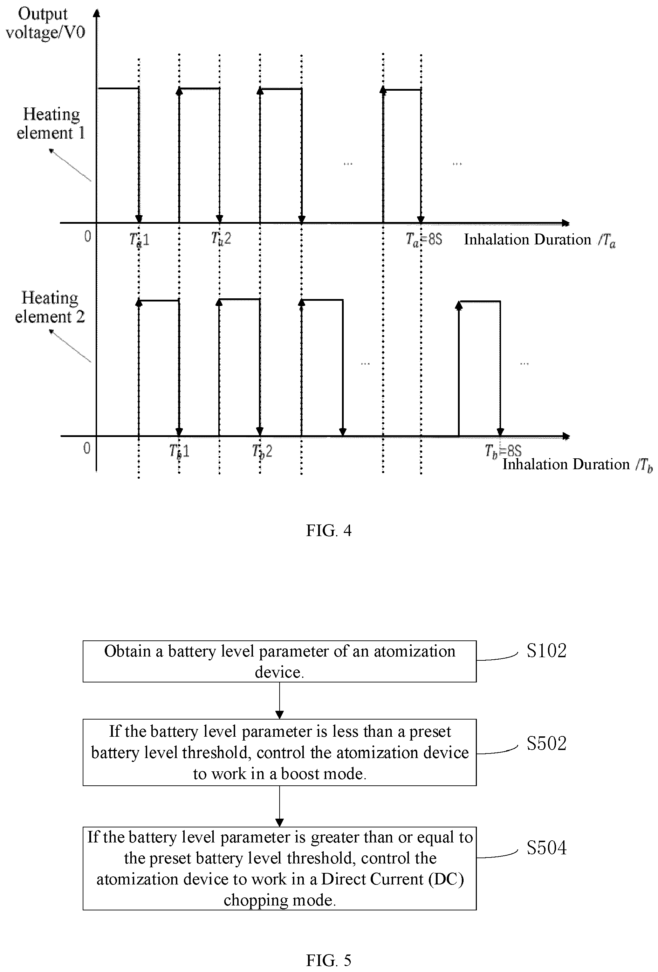

For example, the number of the heating elements is two, and the heating elements include the heating element 1 and the heating element 2, and the number of the output control modules is two, and the output control modules include the output control module 1 and the output control module 2, where the output control module 1 is connected to the heating element 1, and the output control module 2 is connected to the heating element 2. If the battery level parameter is less than the preset threshold, the atomization device is controlled to work in the single-heating element mode, and the heating elements are controlled to work alternately. As shown in FIG. 4, in the first sub-time period Ta1 of the heating element 1, the control module first controls the output control module 1 connected to the heating element 1 to output, so that the heating element 1 works. Then, in the first sub time period Tb1 of the heating element 2, the control module controls the output control module 2 connected to the heating element 2 to output, so that the heating element 2 works.

Then, in the second sub-time period Ta2 of the heating element 1, the control module controls the output control module 1 connected to the heating element 1 to output, so that the heating element 1 works. Then, in the second sub time period Tb2 of the heating element 2, the control module controls the output control module 2 connected to the heating element 2 to output, so that the heating element 2 works, and so on. According to the time axis sequence, there are the first sub-time period of the heating element 1, the first sub-time period of the heating element 2, the second sub-time period of the heating element 1, and the second sub-time period of the heating element 2 successively, and so on.

Step 304: If a sum of cumulative working durations of the heating elements is greater than a preset total duration threshold, control the heating elements to stop working.

A cumulative working duration of each heating element is a sum of working durations of different sub-time periods of each heating element, and the cumulative working durations of the heating elements are added to obtain the sum of the cumulative working durations of the heating elements. The preset total duration threshold is used to represent a desired heating duration, and may be determined according to experiments or experience, or may be flexibly adjusted according to a received user instruction. Exemplarily, in an embodiment, the preset total duration threshold is 8s.

In the working process of the heating elements, the control module records working durations of sub-time periods of each heating element, adds the working durations of the sub-time periods of each heating element to obtain the cumulative working duration of each heating element, and then adds the cumulative working durations of the heating elements to obtain the sum of the cumulative working durations of the heating elements. If the sum of the cumulative working durations of the heating elements is greater than the preset total duration threshold, it is determined that needs of the working duration are met, and the heating elements are controlled to stop working.

In this embodiment, the heating elements are controlled to work alternately. If the sum of the cumulative working durations of the heating elements is greater than the preset total duration threshold, the heating elements are controlled to stop working. Controlling the heating elements to work alternately can avoid an abnormal case in which an excessively high temperature is caused by excessively long heating duration of the heating elements. If the sum of the cumulative working durations of the heating elements is greater than the preset total duration threshold, it is determined that the atomization device has completed a target work task, and the heating elements are controlled to stop working, thereby avoiding a waste of resources.

In an embodiment, as shown in FIG. 5, after step 102, the atomization device control method further includes step 502 and step 504.

Step 502: If the battery level parameter is less than a preset battery level threshold, control the atomization device to work in a boost mode.

If the battery level parameter is less than the preset battery level threshold, it is determined that the current power is relatively low, and a power of the heating element may be too low. In this case, the atomization device is controlled to work in the boost mode, so as to increase the working power of the heating element, thereby avoiding a too fast drop of the power of the heating element.

The preset battery level threshold may be equal to the preset threshold. In this case, if the battery level parameter is less than the preset battery level threshold, there is a high probability that the atomization device will work in the single-heating element mode. The heating power in the single-heating element mode is relatively low. In this case, the atomization device is controlled to work in the boost mode, and the working power of the heating element is increased in a boost manner, which can effectively solve a problem of inhalation interruption caused by a switching delay in the single-heating element working mode.

The preset battery level threshold may be further greater than the preset threshold. In this case, if the battery level parameter is greater than the preset threshold and is less than the preset battery level threshold, the control module controls the atomization device to work in a dual-heating element mode. In this case, the atomization device is controlled to work in the boost mode, and the working power of the heating element is increased in the boost manner, which can effectively solve a problem of a severe mouthfeel attenuation during inhalation in the case of a low power, and a problem of a prolonged switching gap when working of the heating element is switched.

The manner of controlling the atomization device to work in the boost mode is not limited. Exemplarily, a boost circuit is arranged in the atomization device, the boost circuit is connected to the heating element and the control module, and the control module can control the atomization device to work in the boost mode by controlling the boost circuit to work.

It may be understood that, in other embodiments, the atomization device may alternatively be controlled to work in the boost mode according to a detected signal. For example, when a boost instruction sent by a user is received, it is determined that the user wants to increase the heating power in this case, the control module may also control the atomization device to work in the boost mode, thus increasing the heating power, and increasing the atomization amount or the atomization rate, and the like, so as to meet user's needs.

Step 504: If the battery level parameter is greater than or equal to the preset battery level threshold, control the atomization device to work in a Direct Current (DC) chopping mode.

The DC chopping mode refers to a working mode in which the atomization device converts, according to a control signal of the control module, an accessed power supply voltage into a voltage corresponding to the control signal. A voltage provided for the heating element in the boost mode is greater than a voltage provided for the heating element in the DC chopping mode. Generally, the power of the heating element in the boost mode is greater than the power of the heating element in the DC chopping mode.

If the battery level parameter is greater than or equal to the preset battery level threshold, it is determined that the current power is relatively high, and no further boost may be performed on the heating element. In this case, the atomization device is controlled to work in the DC chopping mode, so that the atomization device can work according to a default working procedure or user's needs.

The manner of controlling the atomization device to work in the DC chopping mode is not limited. Exemplarily, a DC chopper is arranged in the atomization device, the DC chopper is connected to the heating element and the control module, and the control module may control the atomization device to work in the DC chopping mode by controlling the working state of the DC chopper.

In this embodiment, the atomization device is controlled to work in different modes according to the relationship between the battery level parameter and the preset battery level threshold, so that the working performance of the atomization device can be fully ensured. When the battery level parameter is greater than or equal to the preset battery level threshold, the atomization device is controlled to work in the DC chopping mode to implement on-demand working. When the battery level parameter is less than the preset battery level threshold, the atomization device is controlled to work in the boost mode, which is conducive to a solution of the problem of inhalation interruption caused by the switching delay in the single-heating element mode, and the problems of the mouthfeel attenuation and the prolonged switching delay of the single heating element when the battery power is relatively low in the dual-heating element mode, thereby improving atomization quality of the atomization device and meeting user's needs better.

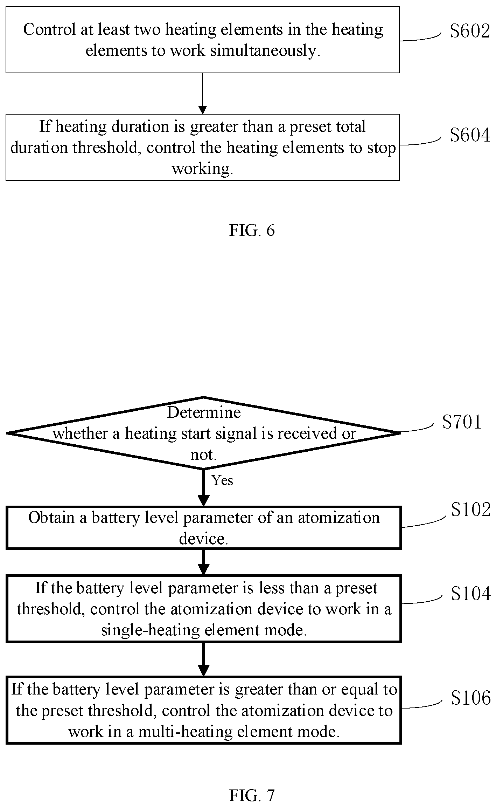

In an embodiment, as shown in FIG. 6, in step 106, the step of controlling the atomization device to work in the multi-heating element mode includes step 602 and step 604.

Step 602: Control at least two heating elements in the heating elements to work simultaneously.

At least two heating elements of the heating elements are controlled to work simultaneously. Further, working heating elements include heating elements connected to different output control modules respectively. The number of the working heating elements may be determined according to actual needs. For example, if the atomization device includes two heating elements, the number of heating elements working in the multi-heating element mode is two. If the atomization device includes three heating elements, the number of heating elements working in the multi-heating element mode may be two or three. It may be understood that the number of heating elements working in the multi-heating element mode is not limited and may be determined according to actual needs.

Step 604: If heating duration is greater than a preset total duration threshold, control the heating elements to stop working.

The heating duration refers to duration from a moment heating starts to a current moment. The preset total duration threshold is used to represent desired heating duration, and may be determined according to experiments or experience, or may be flexibly adjusted according to a received user instruction. Exemplarily, in an embodiment, the preset total duration threshold is 8s.

In the working process of the heating elements, the control module records the heating duration, compares the heating duration with the preset total duration threshold, if the heating duration is greater than the preset total duration threshold, determines that needs of the working duration are met, and controls each heating element to stop working.

In this embodiment, at least two heating elements of the heating elements are controlled to work simultaneously, thus a relatively large power is matched by a relatively large consumption of the aerosol-forming substrate, so as to improve the match between e-liquid and battery level matching. When the heating duration is greater than the preset total duration threshold, it is determined that the atomization device has completed a target work task, each heating element is controlled to stop working, thereby avoiding a waste of resources.

In an embodiment, as shown in FIG. 7, before step 102, the atomization device control method further includes step 701.

Step 701: Determine whether a heating start signal is received or not.

If yes, step 102 is performed. The heating start signal is used to represent a heating need. If the heating start signal is received, it is determined that the user has a heating need for the atomization device in this case, and a subsequent step may be performed to further control and optimize the working process of the atomization device.

The type of the heating start signal is not limited. For example, the heating start signal may be a start signal sent by the user by using an information exchange module. The information exchange module is connected to the control module. The type of the information exchange module is not limited, and for example, the information exchange module may be a key or a touchscreen. Exemplarily, the information exchange module is a key. If the user presses the key and the control module receives a signal that the key is pressed, it is determined that a heating start signal is received.

Alternatively, the heating start signal may be an inhalation signal. The inhalation signal may be detected by using an airflow sensor, and then transmitted to the control module. The airflow sensor may be arranged in an inhalation channel of the atomization device. exemplarily, when the user performs an inhalation action on the atomization device, the airflow sensor detects the inhalation signal and sends the inhalation signal to the control module. After receiving the inhalation signal, the control module may determine that the heating start signal is received.

In this embodiment, after the heating start signal is received, a subsequent control step is performed, so that the atomization device can be started on demand.

In an embodiment, the atomization device control method further includes the following step: In a working process of the heating elements, if a heating stop signal is received, control the heating elements to stop working.

The heating stop signal is used to represent a heating stop need. The type of the heating stop signal may be, for example, a signal opposite to the heating start signal, but is not limited thereto. Exemplarily, the heating stop signal may be a signal sent by the user by using the information exchange module. The information exchange module is connected to the control module, and the type of the information exchange module is not limited. For example, the information exchange module may be a key or a touchscreen. For example, the information exchange module is a key. If the user releases the key and the control module receives a signal that the key is released, it is determined that a heating stop signal is received.

Exemplarily, the heating start signal may alternatively be an inhalation signal. The inhalation signal may be detected by using an airflow sensor, and then transmitted to the control module. The airflow sensor may be arranged in an inhalation channel of the atomization device. Exemplarily, when the user stops the inhalation action on the atomization device, the airflow sensor cannot detect the inhalation signal. If the control module does not receive the inhalation signal transmitted by the airflow sensor, it may be determined that the heating stop signal is received.

In this embodiment, in the working process of the heating elements, if the heating stop signal is received, it is determined that in this case, the atomization device is not required to heat up, and each heating element is controlled to stop working, so that the atomization device is controlled to stop heating up in time, thereby meeting needs and also reducing a waste of resources.

In the foregoing atomization device control method, the atomization device includes at least two heating elements, and the method includes: obtaining the battery level parameter of the atomization device; and if the battery level parameter is less than the preset threshold, controlling the atomization device to work in the single-heating element mode, where in the single-heating element mode, only one heating element in the atomization device works; and if the battery level parameter is greater than or equal to the preset threshold, controlling the atomization device to work in the multi-heating element mode, where in the multi-heating element mode, at least two heating elements in the atomization device work simultaneously. The atomization device is controlled to work in different modes according to the value of the battery level parameter of the atomization device, so that different numbers of heating elements can work. The heating degree is matched according to the battery level parameter, and thus the atomization amount is matched, thereby effectively solving the problem of the mismatch between the e-liquid and battery level in the conventional dual-heating wire atomization devices and improving the working performance of the atomization device.

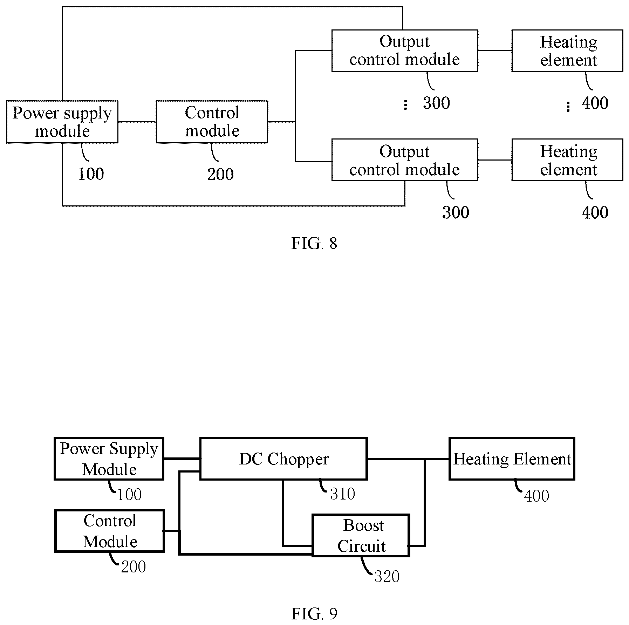

In an embodiment, an atomization device is provided. As shown in FIG. 8, the atomization device includes a power supply module 100, a control module 200, an output control module 300, and a heating element 400. There are at least two heating elements 400. Different heating elements 400 are connected to different output control modules 300 respectively, and the power supply module 100 and each output control module 300 are connected to the control module 200. The control module 200 is configured to implement the method in any one of the foregoing embodiments.

The power supply module 100 is connected to the control module 200 and the output control module 300 and configured to supply power to the control module 200 and the output control module 300. The heating element 400 may be, for example, a heating wire, a heating coil, or a heating plate, but is not limited thereto. Exemplarily, the heating element 400 in this embodiment may be a grid heating wire, and the grid heating wire is obtained by processing a stainless steel sheet into a grid shape through an etching process. There are at least two heating elements 400. Different heating elements 400 are correspondingly connected to different output control modules 300, and one output control module 300 is correspondingly connected to one heating element 400. The heating elements 400 may be separately controlled, so that working states of the heating elements 400 do not interfere with each other. Each output control module 300 is connected to the control module 200, and the control module 200 may control a working state of each output control module 300, so as to control a working state of a heating element 400 connected to the output control module 300. Exemplarily, when the control module 200 controls the output control module 300 to be turned on, the heating element 400 may work after being powered on by the output control module 300, and start to heat up. When the control module 200 controls the output control module 300 to be turned off, the heating element 400 is powered off and stops heating up.

In an embodiment, as shown in FIG. 9, the output control module 300 includes a DC chopper 310 and a boost circuit 320 that are connected to the control module 200, and both the DC chopper 310 and the boost circuit 320 are connected to the heating element 400. The control module 200 is configured to: when a battery level parameter of the atomization device is less than a preset battery level threshold, control both the DC chopper 310 and the boost circuit 320 to work. The control module 200 is further configured to: when the battery level parameter of the atomization device is greater than or equal to the preset battery level threshold, control the DC chopper 310 to work, and control the boost circuit 320 to stop working.

Specifically, When the battery level parameter of the atomization device is less than the preset battery level threshold, the control module 200 controls both the DC chopper 310 and the boost circuit 320 to work, and the voltage boosted by the boost circuit 320 is transmitted to the heating element 400 by using the DC chopper 310, thereby boosting the voltage. If the battery level parameter is less than the preset battery level threshold, it is determined that the current power is relatively low, and the power of the heating element 400 may be too low. In this case, both the DC chopper 310 and the boost circuit 320 are controlled to work, so that the atomization device works in a boost mode, thereby increasing the working power of the heating element 400 and avoiding a too fast drop of the power of the heating element 400.

The control module 200 is further configured to: when the battery level parameter of the atomization device is greater than or equal to the preset battery level threshold, control the DC chopper 310 to work, and control the boost circuit 320 to stop working. The DC chopper converts, according to a control signal of the control module 200, an accessed power supply voltage into a voltage corresponding to the control signal, and then applies the voltage to the heating element 400. If the battery level parameter is greater than or equal to the preset battery level threshold, it is determined that the current power is relatively high, and no further boost may be performed on the heating element 400. In this case, the DC chopper 310 is controlled to work, and the boost circuit 320 is controlled to stop working, so that the atomization device works in a DC chopping mode, and the atomization device can work according to a default working procedure or user's needs.

In this embodiment, the DC chopper 310 and the boost circuit 320 are controlled according to a relationship between the battery level parameter and the preset battery level threshold, so that the atomization device works in different modes, which can fully ensure working performance of the atomization device and better meet the user's needs.

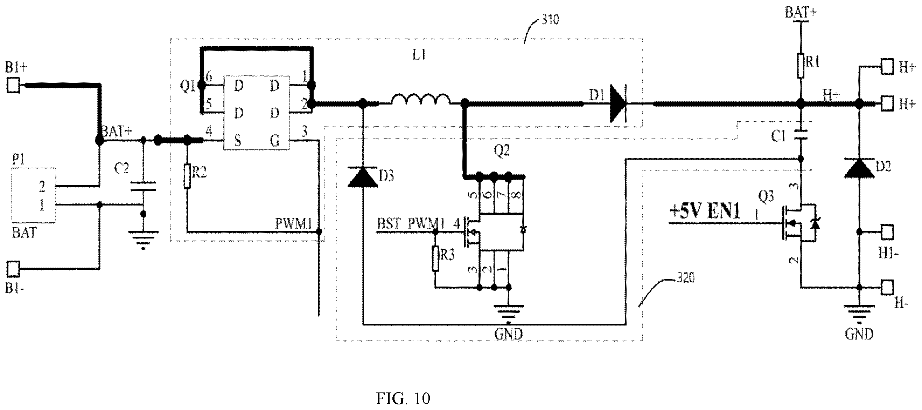

In an embodiment, as shown in FIG. 10, the DC chopper 310 includes an output switching transistor Q1 and an output circuit. A control terminal of the output switching transistor Q1 is connected to the control module 200, a first terminal of the output switching transistor Q1 is connected to the power supply module 100, and a second terminal of the output switching transistor Q1 is connected to the heating element 400 through the output circuit. In the figure, terminals B1+ and B1- are connected to the power supply module, and terminals H+ and H- are connected to two terminals of a heating element, respectively.

The control module 200 may send a control signal to the control terminal of the output switching transistor Q1, and the control signal may be a Pulse Width Modulation (PWM) wave signal configured to control an on/off state of the output switching transistor Q1. When the output switching transistor Q1 is on, electric energy of a power supply connected to the first terminal of the output switching transistor Q1 passes through the first switching transistor, and is transmitted to the heating element 400 through the output circuit, so that the heating element 400 is powered on to work. In this case, the atomization device works in the DC chopping mode. In some embodiments, the first switching transistor is the output switching transistor Q1.

Specifically, the structure of the output circuit is not limited. For example, the output circuit includes an output inductor L1 and an output diode D1. One terminal of the output inductor L1 is connected to the second terminal of the output switching transistor Q1, another terminal of the output inductor L1 is connected to the anode of the output diode D1, and the cathode of the output diode D1 is connected to the heating element 400. When the output switching transistor Q1 is on, the electric energy of the power supply connected to the first terminal of the output switching transistor Q1 passes through the first switching transistor, and then reaches the output inductor L1. After the action by the inductor, the electric energy is transmitted to the heating element 400 through the output diode D1, so that the heating element 400 is powered on to work. It may be understood that, in some other embodiments, the structures of the output circuit and the DC chopper 310 may alternatively be other structures, provided that a person skilled in the art considers that these structures can be implemented.

In this embodiment, the DC chopper 310 includes the output switching transistor Q1 and the output circuit. The control terminal of the output switching transistor Q1 is connected to the control module 200, the first terminal of the output switching transistor Q1 is connected to the power supply module 100, and the second terminal of the output switching transistor Q1 is connected to the heating element 400 through the output circuit. The control module 200 may control the working state of the heating element 400 by controlling the conduction state of the output switching transistor Q1, so as to control the working of the atomization device, for example, control the atomization device to work in the DC chopping mode or not.

In an embodiment, as shown in FIG. 10, the boost circuit 320 includes a boost control switching transistor Q2, a boost capacitor C1, and a boost diode D3. The cathode of the boost diode D3 is connected to the first terminal of the output circuit, the anode of the boost diode D3 is connected to a first terminal of the boost capacitor C1, a second terminal of the boost capacitor C1 is connected to the second terminal of the output circuit, a control terminal of the boost control switching transistor Q2 is connected to the control module 200, a first terminal of the boost control switching transistor Q2 is connected to the output circuit, and a second terminal of the boost control switching transistor Q2 is grounded.

The control module 200 may send a control signal to the control terminal of the boost control switching transistor Q2, where the control signal may be a PWM wave signal configured to control an on/off state of the boost control switching transistor Q2. When the boost control switching transistor Q2 is on, the output circuit is grounded, the boost capacitor C1 and the boost diode D3 are not in use, and the atomization device may work in the DC chopping mode. When the boost control switching transistor Q2 is off, the boost capacitor C1, the boost diode D3, and the output circuit form a loop which takes a function of boosting the voltage, so that the atomization device may work in the boost mode.

Further, taking the output circuit including the output inductor L1 and the output diode D1 as an example, the first terminal of the output circuit refers to a common terminal of the output inductor L1 and the output switching transistor Q1, and is connected to the cathode of the boost diode D3. The second terminal of the output circuit refers to the cathode of the output diode D1, and is connected to the second terminal of the boost capacitor C1. That the first terminal of the boost control switching transistor Q2 is connected to the output circuit means that the first terminal of the boost control switching transistor Q2 is connected to the common terminal of the output circuit, and the common terminal of the output circuit is a common terminal of two components in the output circuit, that is, the common terminal of the output inductor L1 and the output diode D1.

In this embodiment, the boost circuit 320 includes the boost control switching transistor Q2, the boost capacitor C1, and the boost diode D3. The cathode of the boost diode D3 is connected to the first terminal of the output circuit, the anode of the boost diode D3 is connected to a first terminal of the boost capacitor C1, a second terminal of the boost capacitor C1 is connected to the second terminal of the output circuit, a control terminal of the boost control switching transistor Q2 is connected to the control module 200, a first terminal of the boost control switching transistor Q2 is connected to the output circuit, and a second terminal of the boost control switching transistor Q2 is grounded. The control module 200 may control the boost circuit 320 to implement the boost function or not by controlling the conduction state of the boost control switching transistor Q2, thus controlling the atomization device to work in the boost mode or not.

In an embodiment, the atomization device further includes display modules connected to the control module 200, and the display modules are connected to different heating elements 400, respectively. Working states of different heating elements 400 may be displayed through different display modules, thereby providing an intuitive display effect.

Specifically, the type of the display module may be, for example, a display lamp, but is not limited thereto. Remaining power and working time of a corresponding heating element 400 in working are prompted by means of the number of bright display lamps, so that the user can monitor the working state of the atomization device better. It may be understood that, in some other embodiments, the type and function of the display module may be any other type and function, provided that a person skilled in the art considers that they can be implemented.

To make the foregoing embodiments better understood, detailed explanations and descriptions with reference to a specific embodiment are provided hereinafter. Technology of an existing dual-heating wire control is not mature and stable. In a long-term dual-heating wire working mode, a mismatch between e-liquid and battery level is easily caused. The existing dual-heating wire control for a single-heating wire mode, which is executed by means of switching the working heating wire based on a fixed number of inhalations, cannot achieve an ideal effect. In another existing dual-heating wire control for the single-heating wire mode, which is executed by means of switching the working heating wire based on accumulated heating amount of the heating wire, there is a switching gap or a delay at the moment of switching the working heating wire, which easily causes an inhalation interruption and poor user experience. In addition, none of existing dual-heating wire control solutions supports a boost solution, which causes severe mouthfeel attenuation during inhalation in the case of a low power, and a prolonged switching gap in the dual-heating wire control for the single-heating wire mode. To solve the foregoing problems, this application provides an atomization device control method and an atomization device, so as to solve the problem of the mismatch between e-liquid and battery level in the dual-heating wire control solution for the dual-heating wire mode, the problem of the delay in switching the heating wires in the single-heating wire mode, and the problem of the output working mode of the heating wire, thereby improving an inhalation mouthfeel and user experience effect.

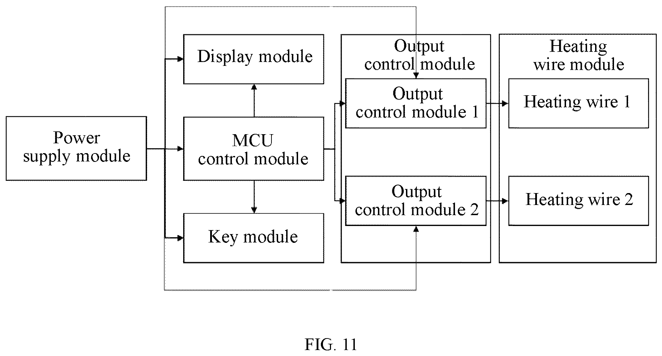

In an embodiment, as shown in FIG. 11, the atomization device includes a power supply module, a control module, an output control module, heating elements, an information exchange module, and a display module. The control module is an MCU control module, the information exchange module is a key module, the output control module includes an output control module 1 and an output control module 2, and the heating elements are heating wires, including a heating wire 1 and a heating wire 2.

The power supply module is configured to supply power to the entire circuit and provide enough electric energy to the output control module. The MCU control module is configured to receive an external instruction, and execute and process the instruction. The display module is configured to display prompts, such as a single/dual-heating wire mode switching prompt, an inhalation effect prompt, and a power prompt. The key module is configured to obtain an external output control instruction and a single/dual-heating wire mode switching instruction, and other operation instructions. The output control module is configured to execute an output control instruction to adjust an output solution and obtain the resistance value of the heating wire. A heating wire module is a mesh resistance wire, and is configured to heat and atomize an aerosol-forming substrate in oil storage cotton.

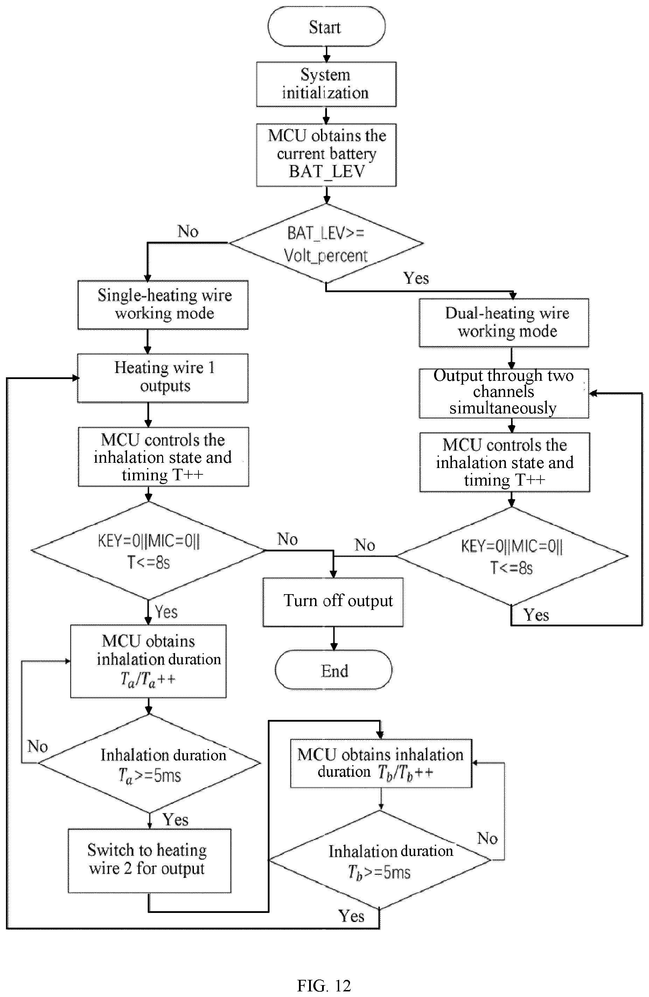

As shown in FIG. 12, the process of the atomization device control method includes the following steps: First, the key module or an external switch (an airflow sensor or the like) obtains an external operation instruction. After obtaining the external operation instruction, the MCU control module 200 starts processing information and performing an internal related detection. If it is determined that the key is in a long-press state KEY=1 or the mic is in an inhalation state MIC=1, and if it is detected that the battery level parameter BAT_LEV of the internal battery is less than the preset threshold Volt_percent, the atomization device is controlled to work in the single-heating element mode, which may be specifically the single-heating wire mode; M_Mode=1 is assigned, and an output control instruction and an output timing instruction T++ are executed; the MCU control module 200 adjusts the output control module 1 and the heating wire 1 to output, and output time Ta of the output control module 1 and the heating wire 1 (i.e., an inhalation duration Ta, or the working duration Ta of the heating element 1) is calculated as Ta++. When the output time Ta of the output control module 1 and the heating wire 1 is greater than or equal to 5 ms, Ta is reset. Thereafter, the MCU control module 200 adjusts the output control module 2 and the heating wire 2 to output, and output time of the output control module 2 and the heating wire 2 (i.e., an inhalation duration Tb, or the working duration Tb of the heating element 2) is calculated as Tb++. When the output time Tb of the output control module 2 and the heating wire 2 is greater than 5 ms, Tb is reset. In addition, the display module (including 8 white LEDs, where LED1-LED4 correspond to the heating wire 1, and LED5-LED8 correspond to the heating wire 2) gives a breathing prompt alternately based on brightness states of LEDs corresponding to the heating wires, so as to indicate the inhalation state. The MCU control module 200 controls the output control module 1 and the heating wire 1, and/or the output control module 2 and the heating wire 2 to output in a cyclic manner. When the key state is KEY=0 or the mic inhalation state is MIC=0 or the total inhalation duration is T=8S (inhalation timeout), the MCU control module 200 exits the output cycle procedure and turns off the output, and the LED display module is turned off.

If it is determined that the battery level parameter BAT_LEV of the current battery is greater than or equal to the preset threshold Volt_percent, the MCU control module 200 controls the atomization device to jump to the multi-heating element mode, which may be specifically a dual-heating wire working mode, M_Mode=2 is assigned, and the MCU control module 200 controls the two output control modules 300 and the two heating wires to work simultaneously. Two groups of LEDs of the LED display module corresponding to two heating wires give a breathing flash prompt for output based on the brightness states thereof. When the key state is KEY=0 or the mic inhalation state is MIC=0 or the total inhalation duration is T=8S (inhalation timeout), the output is turned off, and the LED display module is turned off. The Volt_percent may be a voltage percentage, and is set to 70%. In actual design, the Volt_percent may be set according to a cell type selection.

As shown in FIG. 10, the output control module 300 includes a DC chopper 310 and a boost circuit 320 which are connected to the control module 200, the DC chopper 310 includes an output switching transistor Q1 and an output circuit, and the output circuit includes an output inductor L1 and an output diode D1. The boost circuit 320 includes a boost control switching transistor Q2, a boost capacitor C1, and a boost diode D3. The output switching transistor Q1 is a PMOS transistor, and the boost control switching transistor Q2 is an NMOS transistor.

When the atomization device works in the DC chopping mode with a DC chopping output, and the MCU control module 200 outputs a PWM wave to control the gate of the output switching transistor Q1 to output a desired voltage. In this case, the boost function is turned off, that is, the MCU controls the gate of the boost control switching transistor Q2 to continuously output a high level BST_PWM=1, and the boost control switching transistor Q2 is turned on. When voltage boost is required, the MCU controls the gate of the output switching transistor Q1 to continuously output a low level PWM=0, and the output switching transistor Q1 is turned on. The MCU control module 200 controls the gate of the boost control switching transistor Q2 to output the PWM wave according to needs of the boost voltage, and implements the boost function when the boost control switching transistor Q2 is disconnected.

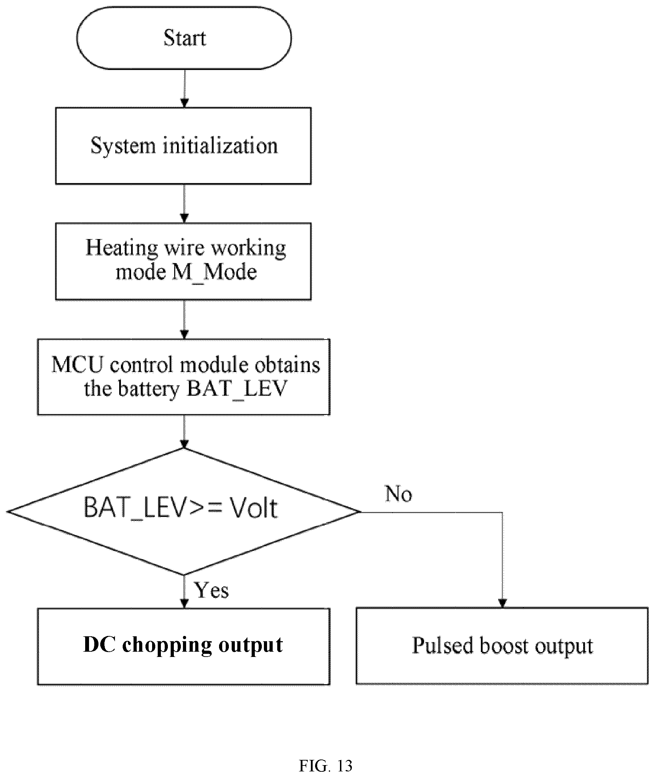

In addition, as shown in FIG. 13, the atomization device control method may further include: After the system is initialized and the working mode of the heating wire is determined, the battery level parameter is obtained, and if the battery level parameter is less than the preset battery level threshold Volt, the atomization device is controlled to work in the boost mode with a pulsed boost output. If the battery level parameter is greater than or equal to the preset battery level threshold Volt, the atomization device is controlled to work in the DC chopping mode with a DC chopping output.

It should be understood that, although the steps are displayed sequentially according to the instructions of the arrows in the flowcharts of the embodiments, these steps are not necessarily performed sequentially according to the sequence instructed by the arrows. Unless otherwise explicitly specified in this specification, execution of the steps is not strictly limited, and the steps may be performed in other sequences. Moreover, at least some of the steps in the flowcharts in each embodiment may include a plurality of sub-steps or a plurality of stages. The steps or stages are not necessarily performed at the same moment but may be performed at different moments. Execution of the steps or stages is not necessarily sequentially performed, but may be performed alternately with other steps or at least some of sub-steps or stages of other steps.

In the atomization device and the atomization device control method provided in this application, the single/dual-heating wire working mode is switched based on the current battery level parameter of the battery, the switching logic of two heating wires in the inhalation process is evenly controlled in the manner of refining the inhalation duration, the boost mode is supported, and the output power is increased. Based on the output working mode switching logic and determining of the single/dual heating wires, and the control logic and the circuit connection relationship of the output control module, the problems of carbon deposition in a long-term working process, a reduced liquid permeation quantity, and a short working life of the single-heating wire control solution can be better solved, the problem of the mismatch between e-liquid and battery level in the existing dual-heating wire control solution can be better solved, the switching delay problem of the existing dual-heating wire control solution in the single-heating wire working mode can be better solved, and real balanced control output can be achieved. The mouthfeel attenuation problem in the case of low power and the problem of the prolonged switching delay of the single heating wire in the existing dual-heating wire control solution can be solved, and the problem that the existing dual-heating wire control solution does not provide an obvious switching prompt for the two heating wire working modes can be solved, thereby comprehensively improving working reliability of the atomization device.

A person of ordinary skill in the art may understand that all or some of procedures of the method in the foregoing embodiments may be implemented by a computer program instructing relevant hardware. The program may be stored in a non-volatile computer-readable storage medium. When the program is executed, the procedures of the foregoing method embodiments may be implemented. Any reference to a memory, a storage, a database, or another medium used in the embodiments provided in this application may include at least one of a non-volatile memory and a volatile memory. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, and the like. The volatile memory may include a random access memory (RAM) or an external cache. For the purpose of description instead of limitation, the RAM is available in a plurality of forms, such as a static RAM (SRAM) or a dynamic RAM (DRAM). The databases involved in the embodiments provided in this application may include at least one of a relational database and a non-relational database. The non-relational database may include a blockchain based distributed database or the like, but is not limited thereto. The processor in the embodiments provided in this application may be a general purpose processor, a central processing unit, a graphics processing unit, a digital signal processor, a programmable logic device, a quantum computing-based data processing logic device, or the like, and is not limited thereto.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments merely express several implementations of this application. The descriptions thereof are relatively specific and detailed, but should not be understood as limitations to the scope of this application. It should be noted that for a person of ordinary skill in the art, several transformations and improvements can be made without departing from the idea of this application. Therefore, the protection scope of this application is defined in the appended claims.

## Claims

1. An atomization device control method, **characterized in that** the atomization device comprises multiple heating elements (400), and the method comprises:
obtaining a battery level parameter of the atomization device; and
if the battery level parameter is less than a preset threshold, controlling the atomization device to work in a single-heating element mode, wherein in the single-heating element mode, one heating element in the atomization device works; or
if the battery level parameter is greater than or equal to the preset threshold, controlling the atomization device to work in a multi-heating element mode, wherein in the multi-heating element mode, at least two heating elements (400)
among the multiple heating elements in the atomization device work simultaneously.

2. The method of claim 1, wherein controlling the atomization device to work in the single-heating element mode comprises:
controlling the heating elements to work successively, wherein only one heating element works within each different time period, and different heating elements work in different time periods; and
if a total working duration of the heating elements is greater than a preset total duration threshold, controlling the heating elements to stop working.

3. The method of claim 1, wherein controlling the atomization device to work in the single-heating element mode comprises:
controlling the heating elements to work alternately; and
if a sum of cumulative working durations of the heating elements is greater than a preset total duration threshold, controlling the heating elements to stop working.

4. The method of any one of claims 1 to 3, wherein after obtaining the battery level parameter of the atomization device, the method further comprises:
if the battery level parameter is less than a preset battery level threshold, controlling the atomization device to work in a boost mode; or
if the battery level parameter is greater than or equal to the preset battery level threshold, controlling the atomization device to work in a Direct Current (DC) chopping mode; wherein a voltage provided for each heating element in the boost mode is greater than a voltage provided for each heating element in the DC chopping mode.

5. The method of claim 1, wherein controlling the atomization device to work in the multi-heating element mode comprises:
controlling at least two heating elements in the multiple heating elements to work simultaneously; and
if heating duration is greater than a preset total duration threshold, controlling the multiple heating elements to stop working.

6. The method of any one of claims 1 to 5, wherein before obtaining the battery level parameter of the atomization device, the method further comprises:
determining whether a heating start signal is received or not; and
if yes, executing step of obtaining the battery level parameter of the atomization device.

7. The method of any one of claims 1 to 6, wherein the method further comprises:
in a working process of the multiple heating elements, if a heating stop signal is received, controlling the multiple heating elements to stop working.

8. The method of any one of claims 1 to 7, wherein the battery level parameter is a battery level value, or a percentage of a current remaining power to a rated power.

9. The method of any one of claims 2, 3, and 5, wherein the preset total duration threshold is 8s.

10. The method of claim 2 or 9, wherein durations of the different time periods are the same.

11. An atomization device comprising a power supply module (100), a control module (200), multiple output control modules (300), and multiple heating elements (400), wherein different heating elements (400) are connected to different output control modules (300), respectively, and the power supply module (100) and each output control module (300) are connected to the control module (200), **characterized in that** the control module (200) is configured to implement the method of any one of claims 1 to 10.

12. The atomization device of claim 11, wherein each output control module (300) comprises a Direct Current (DC) chopper (310) and a boost circuit (320) that are connected to the control module (200), and both the DC chopper (310) and the boost circuit (320) are connected to a corresponding heating element (400);
the control module (200) is configured to, when the battery level parameter of the atomization device is less than the preset battery level threshold, control both the DC chopper (310) and the boost circuit (320) to work; and
the control module (200) is further configured to, when the battery level parameter of the atomization device is greater than or equal to the preset battery level threshold, control the DC chopper (310) to work, and control the boost circuit (320) to stop working.

13. The atomization device of claim 11 or 12, wherein the DC chopper (310) comprises an output switching transistor (Q1) and an output circuit; and
a control terminal of the output switching transistor (Q1) is connected to the control module (200), a first terminal of the output switching transistor (Q1) is connected to the power supply module (100), and a second terminal of the output switching transistor (Q1) is connected to a corresponding heating element (400) through the output circuit.

14. The atomization device of claim 13, wherein the output circuit comprises an output inductor (L1) and an output diode (D1); one terminal of the output inductor (L1) is connected to the second terminal of the output switching transistor (Q1), another terminal of the output inductor (L1) is connected to an anode of the output diode (D1), and a cathode of the output diode (D1) is connected to the corresponding heating element (400).

15. The atomization device of any one of claims 12 to 14, wherein the boost circuit (320) comprises a boost control switching transistor (Q2), a boost capacitor (C1), and a boost diode (D3);
a cathode of the boost diode (D3) is connected to a first terminal of the output circuit, an anode of the boost diode (D3) is connected to a first terminal of the boost capacitor (C1), and a second terminal of the boost capacitor (C1) is connected to a second terminal of the output circuit; and
a control terminal of the boost control switching transistor (Q2) is connected to the control module (200), a first terminal of the boost control switching transistor (Q2) is connected to the output circuit, and a second terminal of the boost control switching transistor (Q2) is grounded.

## Patentansprüche

1. Steuerverfahren für eine Zerstäubungsvorrichtung, **dadurch gekennzeichnet, dass** die Zerstäubungsvorrichtung mehrere Heizelemente (400) umfasst und das Verfahren Folgendes umfasst:
Erhalten eines Batteriestandparameters der Zerstäubungsvorrichtung; und
falls der Batteriestandparameter kleiner als ein voreingestellter Schwellenwert ist, Steuern der Zerstäubungsvorrichtung, um in einem Einzel-Heizelementmodus zu arbeiten, wobei in dem Einzel-Heizelementmodus ein Heizelement in der Zerstäubungsvorrichtung arbeitet; oder
falls der Batteriestandparameter größer oder gleich dem voreingestellten Schwellenwert ist, Steuern der Zerstäubungsvorrichtung, um in einem Mehrfach-Heizelementmodus zu arbeiten, wobei in dem Mehrfach-Heizelementmodus mindestens zwei Heizelemente (400) unter den mehreren Heizelementen in der Zerstäubungsvorrichtung gleichzeitig arbeiten.

2. Verfahren nach Anspruch 1, wobei das Steuern der Zerstäubungsvorrichtung, um im Einfach-Heizelementmodus zu arbeiten, Folgendes umfasst:
Steuern der Heizelemente in einer Weise, dass sie nacheinander arbeiten, wobei nur ein Heizelement innerhalb jedes unterschiedlichen Zeitraums arbeitet und unterschiedliche Heizelemente in unterschiedlichen Zeiträumen arbeiten; und
falls eine Gesamtarbeitsdauer der Heizelemente größer als ein vorgegebener Gesamtdauer-Schwellenwert ist, so werden die Heizelemente so gesteuert, dass sie nicht mehr arbeiten.

3. Verfahren nach Anspruch 1, wobei das Steuern der Zerstäubungsvorrichtung, um im Einfach-Heizelementmodus zu arbeiten, Folgendes umfasst:
Steuern der Heizelemente in einer Weise, dass sie abwechselnd arbeiten; und
falls eine Summe kumulierter Arbeitsdauern der Heizelemente größer als ein vorgegebener Gesamtdauer-Schwellenwert ist, so werden die Heizelemente so gesteuert, dass sie nicht mehr arbeiten.

4. Verfahren nach einem der Ansprüche 1 bis 3, wobei das Verfahren nach dem Erhalten des Batteriestandparameters der Zerstäubungsvorrichtung ferner Folgendes umfasst:
falls der Batteriestandparameter kleiner als ein voreingestellter Batteriestand-Schwellenwert ist, Steuern der Zerstäubungsvorrichtung, um in einem Verstärkungsmodus zu arbeiten; oder
falls der Batteriestandparameter größer als oder gleich dem voreingestellten Batteriestand-Schwellenwert ist, Steuern der Zerstäubungsvorrichtung, um in einem Gleichstrom (DC)-Zerhackungsmodus zu arbeiten; wobei eine Spannung, die für jedes Heizelement in dem Verstärkungsmodus bereitgestellt wird, größer als eine Spannung ist, die für jedes Heizelement in dem DC-Zerhackungsmodus bereitgestellt wird.

5. Verfahren nach Anspruch 1, wobei das Steuern der Zerstäubungsvorrichtung zum Arbeiten in dem Mehrfach-Heizelementmodus Folgendes umfasst:
Steuern von mindestens zwei Heizelementen in den mehreren Heizelementen, um gleichzeitig zu arbeiten; und
falls die Heizdauer größer als ein vorgegebener Gesamtdauer-Schwellenwert ist, Steuern der mehreren Heizelemente, damit sie nicht mehr arbeiten.

6. Verfahren nach einem der Ansprüche 1 bis 5, wobei das Verfahren vor dem Erhalten des Batteriestandparameters der Zerstäubungsvorrichtung ferner Folgendes umfasst:
Bestimmen, ob ein Heizstartsignal empfangen wird oder nicht; und
wenn ja, Ausführen des Schritts des Erhaltens des Batteriestandparameters der Zerstäubungsvorrichtung.

7. Verfahren nach einem der Ansprüche 1 bis 6, wobei das Verfahren ferner Folgendes umfasst:
Bei einem Arbeitsvorgang der Vielzahl von Heizelementen wird, wenn ein Heizstoppsignal empfangen wird, die Vielzahl von Heizelementen angesteuert, um die Arbeit anzuhalten.

8. Verfahren nach einem der Ansprüche 1 bis 7, wobei der Batteriestandparameter ein Batteriestandwert oder ein Prozentsatz einer aktuellen Restleistung zu einer Nennleistung ist.

9. Verfahren nach einem der Ansprüche 2, 3 und 5, wobei der voreingestellte Gesamtdauer-Schwellenwert 8s beträgt

10. Verfahren nach Anspruch 2 oder 9, wobei die Dauern der verschiedenen Zeiträume gleich sind.

11. Zerstäubungsvorrichtung, die ein Stromversorgungsmodul (100), ein Steuermodul (200), mehrere Ausgangssteuermodule (300) und mehrere Heizelemente (400) umfasst, wobei unterschiedliche Heizelemente (400) jeweils mit unterschiedlichen Ausgangssteuermodulen (300) verbunden sind und das Stromversorgungsmodul (100) und jedes Ausgangssteuermodul (300) mit dem Steuermodul (200) verbunden sind, **dadurch gekennzeichnet, dass**
das Steuermodul (200) dazu ausgelegt ist, das Verfahren nach einem der Ansprüche 1 bis 10 zu implementieren.

12. Zerstäubungsvorrichtung nach Anspruch 11, wobei jedes Ausgangssteuermodul (300) einen Gleichstrom (DC)-Zerhacker (310) und eine Verstärkungsschaltung (320) umfasst, die mit dem Steuermodul (200) verbunden sind, und sowohl der DC-Zerhacker (310) als auch die Verstärkungsschaltung (320) mit einem entsprechenden Heizelement (400) verbunden sind;
das Steuermodul (200) dazu ausgelegt ist, wenn der Batteriestandparameter der Zerstäubungsvorrichtung kleiner als der voreingestellte Batteriestand-Schwellenwert ist, sowohl den DC-Zerhacker (310) als auch die Verstärkungsschaltung (320) zu steuern, um zu arbeiten; und
das Steuermodul (200) ferner dazu ausgelegt ist, wenn der Batteriestandparameter der Zerstäubungsvorrichtung größer als oder gleich dem voreingestellten Batteriestand-Schwellenwert ist, den DC-Zerhacker (310) zu steuern, um zu arbeiten, und die Verstärkungsschaltung (320) zu steuern, um die Arbeit anzuhalten.

13. Zerstäubungsvorrichtung nach Anspruch 11 oder 12, wobei der DC-Zerhacker (310) einen Ausgangsschalttransistor (Q1) und eine Ausgangsschaltung umfasst; und
ein Steueranschluss des Ausgangsschalttransistors (Q1) mit dem Steuermodul (200) verbunden ist, ein erster Anschluss des Ausgangsschalttransistors (Q1) mit dem Stromversorgungsmodul (100) verbunden und ein zweiter Anschluss des Ausgangsschalttransistors (Q1) über die Ausgangsschaltung mit einem entsprechenden Heizelement (400) verbunden ist.

14. Zerstäubungsvorrichtung nach Anspruch 13, wobei die Ausgangsschaltung eine Ausgangsinduktivität (L1) und eine Ausgangsdiode (D1) umfasst; ein Anschluss der Ausgangsinduktivität (L1) mit dem zweiten Anschluss des Ausgangsschalttransistors (Q1) verbunden ist, ein anderer Anschluss der Ausgangsinduktivität (L1) mit einer Anode der Ausgangsdiode (D1) verbunden ist und eine Kathode der Ausgangsdiode (D1) mit dem entsprechenden Heizelement (400) verbunden ist.

15. Zerstäubungsvorrichtung nach einem der Ansprüche 12 bis 14, wobei die Verstärkungsschaltung (320) einen Verstärkungs-Steuerschalttransistor (Q2), einen Verstärkungskondensator (C1) und eine Verstärkungsdiode (D3) umfasst;
eine Kathode der Verstärkungsdiode (D3) mit einem ersten Anschluss der Ausgangsschaltung verbunden ist, eine Anode der Verstärkungsdiode (D3) mit einem ersten Anschluss des Verstärkungskondensators (C1) verbunden ist und ein zweiter Anschluss des Verstärkungskondensators (C1) mit einem zweiten Anschluss der Ausgangsschaltung verbunden ist; und
ein Steueranschluss des Verstärkungs-Steuerschalttransistors (Q2) mit dem Steuermodul (200) verbunden ist, ein erster Anschluss des Verstärkungs-Steuerschalttransistors (Q2) mit dem Ausgangskreis verbunden ist und ein zweiter Anschluss des Verstärkungs-Steuerschalttransistors (Q2) geerdet ist.

## Revendications

1. Procédé de commande d'un dispositif d'atomisation, **caractérisé en ce que** le dispositif d'atomisation comprend plusieurs éléments chauffants (400), et le procédé comprend :
l'obtention d'un paramètre de niveau de batterie du dispositif d'atomisation ; et
si le paramètre de niveau de batterie est inférieur à un seuil prédéfini, la commande du dispositif d'atomisation pour qu'il fonctionne en mode élément chauffant unique,
dans lequel en mode élément chauffant unique, un seul élément chauffant du dispositif d'atomisation fonctionne ; ou
si le paramètre de niveau de batterie est supérieur ou égal au seuil prédéfini, la commande du dispositif d'atomisation pour qu'il fonctionne en mode éléments chauffants multiples, dans lequel en mode éléments chauffants multiples, au moins deux éléments chauffants (400) parmi les éléments chauffants multiples du dispositif d'atomisation fonctionnent simultanément.

2. Procédé selon la revendication 1, dans lequel la commande du dispositif d'atomisation pour qu'il fonctionne en mode élément chauffant unique comprend :
la commande des éléments chauffants pour qu'ils fonctionnent successivement, dans lequel un seul élément chauffant fonctionne à chaque période de temps différente, et différents éléments chauffants fonctionnent à des périodes de temps différentes ; et
si une durée totale de fonctionnement des éléments chauffants est supérieure à un seuil de durée totale prédéfini, la commande de l'arrêt de fonctionnement des éléments chauffants.

3. Procédé selon la revendication 1, dans lequel la commande du dispositif d'atomisation pour qu'il fonctionne en mode élément chauffant unique comprend :
la commande des éléments chauffants pour qu'ils fonctionnent en alternance ; et
si la somme des durées cumulées de fonctionnement des éléments chauffants est supérieure à un seuil de durée totale prédéfini, la commande de l'arrêt de fonctionnement des éléments chauffants.

4. Procédé selon l'une quelconque des revendications 1 à 3, dans lequel après l'obtention du paramètre de niveau de batterie du dispositif d'atomisation, le procédé comprend en outre :
si le paramètre de niveau de batterie est inférieur à un seuil de niveau de batterie prédéfini, la commande du dispositif d'atomisation pour qu'il fonctionne en mode suralimentation ; ou
si le paramètre de niveau de batterie est supérieur ou égal au seuil de niveau de batterie prédéfini, la commande du dispositif d'atomisation pour qu'il fonctionne en mode coupure de courant continu (CC) ; dans lequel une tension fournie pour chaque élément chauffant en mode suralimentation est supérieure à une tension fournie pour chaque élément chauffant en mode coupure de CC.

5. Procédé selon la revendication 1, dans lequel la commande du dispositif d'atomisation pour qu'il fonctionne en mode éléments chauffants multiples comprend :
la commande d'au moins deux éléments chauffants parmi les éléments chauffants multiples pour qu'ils fonctionnent simultanément ; et
si la durée de chauffage est supérieure à un seuil de durée totale prédéfini, la commande de l'arrêt de fonctionnement des éléments chauffants multiples.

6. Procédé selon l'une quelconque des revendications 1 à 5, dans lequel, avant l'obtention du paramètre de niveau de batterie du dispositif d'atomisation, le procédé comprend en outre :
la détermination de si un signal de début de chauffage est reçu ou non ; et
si oui, l'exécution de l'étape d'obtention du paramètre de niveau de batterie du dispositif d'atomisation.

7. Procédé selon l'une quelconque des revendications 1 à 6, dans lequel le procédé comprend en outre :
lors d'un processus de fonctionnement des éléments chauffants multiples, si un signal d'arrêt de chauffage est reçu, la commande de l'arrêt de fonctionnement des éléments chauffants multiples.

8. Procédé selon l'une quelconque des revendications 1 à 7, dans lequel le paramètre de niveau de batterie est une valeur de niveau de batterie, ou un pourcentage d'une puissance restante actuelle par rapport à une puissance nominale.

9. Procédé selon l'une quelconque des revendications 2, 3 et 5, dans lequel le seuil de durée totale prédéfini est de 8 s.

10. Procédé selon la revendication 2 ou 9, dans lequel les durées des différentes périodes de temps sont les mêmes.

11. Dispositif d'atomisation comprenant un module d'alimentation électrique (100), un module de commande (200), de multiples modules de commande de sortie (300) et de multiples éléments chauffants (400), dans lequel différents éléments chauffants (400) sont connectés respectivement à différents modules de commande de sortie (300), et le module d'alimentation électrique (100) et chaque module de commande de sortie (300) sont connectés au module de commande (200), **caractérisé en ce que**
le module de commande (200) est configuré pour mettre en œuvre le procédé selon l'une quelconque des revendications 1 à 10.

12. Dispositif d'atomisation selon la revendication 11, dans lequel chaque module de commande de sortie (300) comprend un interrupteur de courant continu (CC) (310) et un circuit de suralimentation (320) qui sont connectés au module de commande (200), et à la fois l'interrupteur de CC (310) et le circuit de suralimentation (320) sont connectés à un élément chauffant correspondant (400) ;
le module de commande (200) est configuré pour, lorsque le paramètre de niveau de batterie du dispositif d'atomisation est inférieur au seuil de niveau de batterie prédéfini, commander à la fois l'interrupteur de CC (310) et le circuit de suralimentation (320) pour qu'ils fonctionnent ; et
le module de commande (200) est en outre configuré pour, lorsque le paramètre de niveau de batterie du dispositif d'atomisation est supérieur ou égal au seuil de niveau de batterie prédéfini, commander l'interrupteur de CC (310) pour qu'il fonctionne, et commander le circuit de suralimentation (320) pour qu'il cesse de fonctionner.

13. Dispositif d'atomisation selon la revendication 11 ou 12, dans lequel l'interrupteur de CC (310) comprend un transistor de commutation de sortie (Q1) et un circuit de sortie ; et
une borne de commande du transistor de commutation de sortie (Q1) est connectée au module de commande (200), une première borne du transistor de commutation de sortie (Q1) est connectée au module d'alimentation électrique (100), et une seconde borne du transistor de commutation de sortie (Q1) est connectée à un élément chauffant correspondant (400) par l'intermédiaire du circuit de sortie.

14. Dispositif d'atomisation selon la revendication 13, dans lequel le circuit de sortie comprend une inductance de sortie (L1) et une diode de sortie (D1) ; une borne de l'inductance de sortie (L1) est connectée à la seconde borne du transistor de commutation de sortie (Q1), une autre borne de l'inductance de sortie (L1) est connectée à une anode de la diode de sortie (D1), et une cathode de la diode de sortie (D1) est connectée à l'élément chauffant correspondant (400).

15. Dispositif d'atomisation selon l'une quelconque des revendications 12 à 14, dans lequel le circuit de suralimentation (320) comprend un transistor de commutation de commande de suralimentation (Q2), un condensateur de suralimentation (C1) et une diode de suralimentation (D3) ;
une cathode de la diode de suralimentation (D3) est connectée à une première borne du circuit de sortie, une anode de la diode de suralimentation (D3) est connectée à une première borne du condensateur de suralimentation (C1), et une seconde borne du condensateur de suralimentation (C1) est connectée à une seconde borne du circuit de sortie ; et
une borne de commande du transistor de commutation de commande de suralimentation (Q2) est connectée au module de commande (200), une première borne du transistor de commutation de commande de suralimentation (Q2) est connectée au circuit de sortie, et une seconde borne du transistor de commutation de commande de suralimentation (Q2) est mise à la masse.
